# EUROPEAN PATENT APPLICATION

(11) **EP 1 933 227 A1**
(43) Date of publication of application: **18.06.2008**
(21) Application number: 07015778.9
(22) Date of filing: 10.08.2007
(51) Int. Cl.: G06F 3/03

(54) **Position detecting apparatus**

(30) Priority: 12.12.2006 JP 2006334561
(71) Applicant: MITSUBISHI ELECTRIC CORPORATION, Chiyoda-ku Tokyo 100-8310 (JP)
(72) Inventor: Shibue, Shigeroni, Chiyoda-ku Tokyo 100-8310 (JP); Asamura, Yoshinori, Chiyoda-ku Tokyo 100-8310 (JP)
(74) Representative: Pfenning, Meinig & Partner GbR

(57) **Abstract**

A position detecting apparatus includes an indicating unit **2** for projecting light onto the front surface of a display screen **11** on which imaging light is projected from the back thereof by a projector **12**, an imaging unit **3** placed at the back of the display screen **11**, for picking up from the back thereof the light projected by the indicating unit **2** and for converting the light into electric signals, and an image processing unit **4** for analyzing the electric signals obtained from the imaging unit **3** and for calculating a position on the display screen **11**, of the indicating unit **2**.

## Description

### Background of the Invention

### Field of the Invention

The present invention relates to position detecting apparatus that optically detects a position on a display screen, indicated by an indicating unit.

### Description of the Related Art

As for an apparatus that optically detects an indicated position on a display screen, a position detecting apparatus has been proposed (in Patent Document 1, for example); the apparatus is provided at the front circumference of a display screen with a light source and a retroreflective material, and detects a position that an indicating unit indicates, by emitting a scanning beam parallel to the display screen and taking an image produced by retroreflective light from the indicating unit placed on the display screen.

Patent Document 1: Japanese Patent Laid-Open No. 2004-5171 (paragraph 0016, and Fig. 1)

In an above-mentioned method in which an image of the indicating unit is taken at the front of the display screen, a problem has been that when an obstacle is placed on the screen the apparatus can not distinguish the indicating unit from the obstacle, so that the apparatus can not detect accurately the position of the indicating unit.

The present invention is made to solve the problem above-mentioned, and aims to obtain a position detecting apparatus that can detect accurately a position on a display screen, indicated by an indicating unit.

### Summary of the Invention

A position detecting apparatus according to the present invention includes an indicating unit for projecting light onto the front surface of a display screen on which imaging light is projected from the back thereof by a projector, an imaging unit placed at the back of the display screen, for picking up from the back thereof the light projected by the indicating unit and for converting the light into an electric signal, and an image processing unit for analyzing the electric signal obtained from the imaging unit and for calculating a coordinate position on the display screen, of the indicating unit.

According to the present invention, a position detecting apparatus detects a position of light projected by an indicating unit onto the front of a display screen by taking from the back of the screen an image thereof; therefore, even with an obstacle placed on the display screen, the apparatus can detect accurately a position on the display screen, of the indicating unit.

### Brief Description of the Drawings

Fig. 1 is a configurational view of a position detecting apparatus of Embodiment 1 according to the present invention;
Fig. 2 is a configurational view of an indicating unit of Embodiment 1 according to the present invention;
Fig. 3 is a view for explaining the operations of the position detecting apparatus of Embodiment 1 according to the present invention; and
Fig. 4A, Fig. 4B, Fig. 4C, Fig. 4D, Fig. 4E, and Fig. 4F are views of electric signals that an imaging unit, of Embodiment 1 according to the present invention, outputs.

### Detailed Description of the Preferred Embodiments

### Embodiment 1.

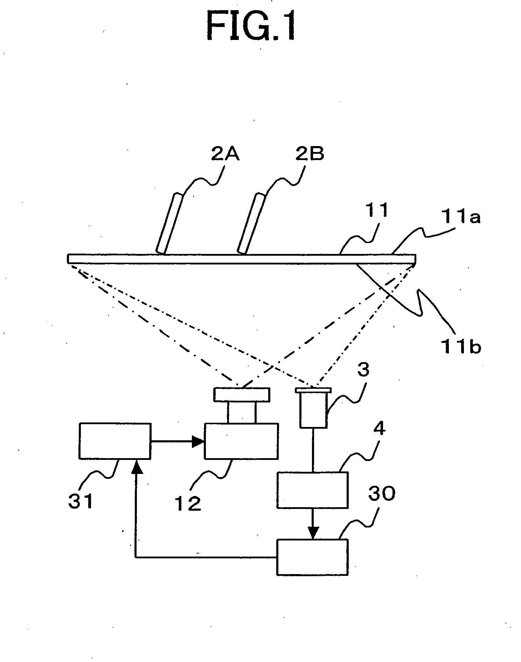

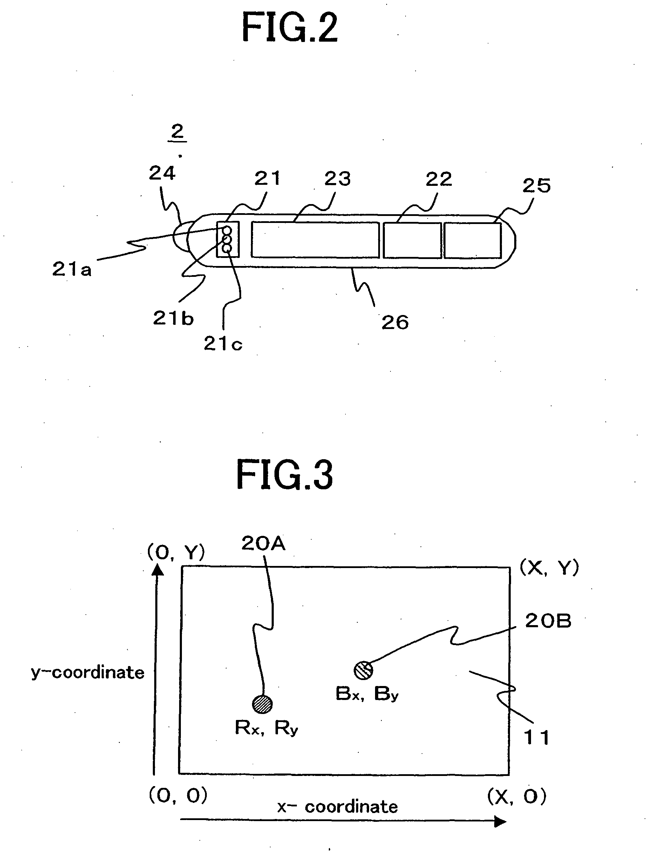

In Fig. 1 and Fig. 2, a position detecting apparatus of Embodiment 1 according to the present invention is illustrated. Fig. 1 is a configurational view of the position detecting apparatus, and Fig. 2 is a configurational one of an indicating unit of the position detecting apparatus. The position detecting apparatus shown in the figures includes indicating units **2A** and 2B (for convenience, each of them is simply referred to as **"2")** that project light of a predetermined wavelength, an imaging unit **3** for picking up images of a displaying surface **11a** of a display screen **11** (a display screen of a rear projector) from the back-face **11b** side, and an image processing unit **4** for analyzing electric signals obtained from the imaging unit **3** and for calculating two-dimensional coordinates on the display screen **11,** of the light projected from the indicating units **2A, 2B,** or **2.**

When the front surface **11a** of the display screen **11** is touched with the tip of the indicating unit **2,** the unit projects light of a predetermined wavelength onto the display screen **11.** As the configuration of the indicating unit shown in Fig. 2, a light-emitting portion **21** including a plurality of light-emitting diodes each having a different wavelength, a switch **22** for selecting a wavelength of light to be projected (a light-emitting diode), a driver **23** for driving the selected light-emitting diode, a lens **24** provided at the tip thereof for outputting efficiently light from the light-emitting portion **21,** and a power source **25** are provided in a housing **26.** The light-emitting portion **21** is provided with three types of light-emitting diodes 21a, 21b, and 21c each of which has a different wavelength. The light-emitting diode **21a** emits red light (660 nanometers); the light-emitting diode **21b** emits blue green light (560 nanometers); the light-emitting diode **21c** emits purple light (420 nanometers). These wavelengths are selected from wavelengths excluding a line spectrum (440 nanometers, 550 nanometers, and 580 nanometers) of light from a light-emitting lamp that is a light source of the projector **12** and not shown in the figure; that is, the wavelengths are selected from wavebands that the projector **12** projects with low intensities or hardly projects as a matter of practice. When switching with the selection switch **22** from one of the light-emitting diodes to a different one to emit light, the indicating unit **2** can change its wavelength of light to emit light. In this embodiment, using two indicating units **2A** and **2B,** the light-emitting diode **21a** of the indicating unit **2A** is selected to emit red light (660 nanometers) and the light-emitting diode **21b** of the indicating unit 2B is selected to emit blue green light (500 nanometers), so that the wavelengths of the light projected by the indicating units **2A** and **2B** are different from each other. In addition, in this embodiment, it has been exemplified that the two indicating units **2A** and **2B** are used as indicating units; one indicating unit **2,** or three or more indicating units **2** may be used.

The imaging unit **3** is housed in the rear projector housing not shown in the figure so that a camera (a main component of the imaging unit **3)** is installed close to the projector **12** of the rear projector, as shown in Fig. 1. More specifically, the imaging unit **3** is placed in such a manner that the front faces of the projector **12** and the camera of the imaging unit **3** are each aligned on a plane approximately parallel to the display screen **11.** This enables the imaging area of the imaging unit **3** to include an area on the display screen **11** onto which the projector **12** projects images, and prevents the imaging unit **3** from blocking an optical path through which the projector **12** projects images onto the display screen **11.** In addition, the imaging unit **3** is provided with optical filters not shown in the figure in order to distinguish light in wavelength, so that the imaging unit converts into electric signals the light of the wavelengths (660 nanometers, 500 nanometers, and 420 nanometers) that the indicating unit **2** can project, distinguishing the wavelengths.

On the basis of the electric signals that have been outputted from the imaging unit **3** separately in wavelengths, the image processing unit **4** separately calculates the positions of the indicating units **2A** and **2B** as the two-dimensional coordinates on the display screen **11**. The two-dimensional-coordinate positional information calculated for each of the indicating units **2A** and **2B** is inputted into a computer 31 through an external interface **30** such as a local-area network (LAN) or a universal serial bus (USB).

The computer **31** stores image information and outputs the stored information to the projector **12** as image signals. At this time, if the positional information is inputted from the external interface **30,** application software having been installed in the computer controls the image information on the basis of the inputted positional information, and outputs as image signals the controlled image information to the projector **12.**

The projector **12** receives the image signals and projects the image from the back of the display screen **11** so that the projected image forms an image on the front-most surface **11**a of the display screen **11;** therefore, the image that is produced from the image signals outputted by the computer **31** can be seen from the front side of the display screen **11.**

The operations of this apparatus are described below.
When the displaying surface **11a** is touched simultaneously with the two indicating units **2A** and 2B, a light spot 20A due to the light of the 660-nanometer wavelength projected by the indicating unit **2A** and a light spot 20B due to the light of the 500-nanometer wavelength projected by the indicating unit 2B, appear on the back surface **11b** of the display screen **11**. At the same time, on the back surface **11b** of the display **11,** the projector **12** also produces images. However, the imaging unit **3** distinguishes light in wavelength, so that the imaging unit only detects as images, as shown in Fig. 3, images of the light spots 20A and 20B. In addition, the imaging unit outputs different signals while distinguishing between the light from the spot 20A having been projected by the indicating unit **2A** and the light from the spot 20B having been projected by the indicating unit 2B. Even when there is an obstacle on the display screen **11,** because the imaging unit 3 only detects the light from the spots 20A and 20B that has been projected by the indicating units **2A** and 2B, the imaging unit **3** does not detect erroneously the obstacle.

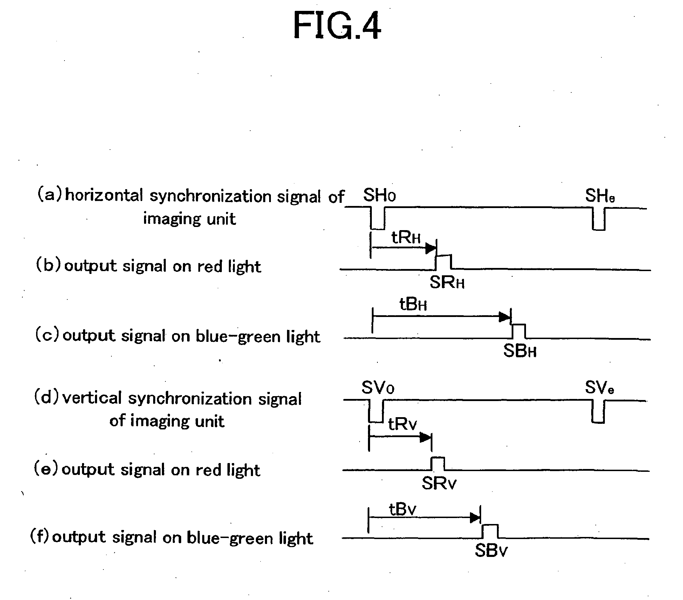

The image processing unit **4** separates electric signals SR corresponding to the light from the spot 20A and electric signals *SB* corresponding to the light from the spot 20B from signals outputted by the imaging unit **3,** and the imaging processing unit calculates separately the coordinate positions on the display screen **11** that have been indicated by the indicating units 2A and 2B. Using Figs. 4, coordinate calculations will be exemplified below. In the figures, Fig. 4A illustrates a horizontal synchronization signal, Fig. 4B illustrates a signal for detecting the red light from the spot **20A** projected by the indicating unit **2A,** and Fig. 4C illustrates a signal for detecting the blue green light from the spot 20B projected by the indicating unit 2B. In Fig. 4A, the starting point *SHₒ* of the horizontal synchronization signal corresponds to the left extremity (x = 0) in the horizontal direction on the display screen **11,** and the ending point *SHₑ* thereof corresponds to the right extremity (x = X) in the horizontal direction on the display screen **11.** That is, using a time *tR_{H}* between the staring point *SHₒ* and a time point *SR_{H}* at which an electric signal due to the red light from the spot **20A** is detected, the horizontal position of the light spot **20A** (*Rₓ*) on the display screen can be calculated. In a similar fashion, the horizontal position *Bₓ* of the blue green light spot **20B** can be calculated, using a time *tB_{H}* between the time *SHₒ* and a time point *SB_{H}* at which the light signal is detected.

Similar calculations are made for vertical coordinates as follows. In Fig. 4D, the starting point *SVₒ* of the vertical synchronization signal corresponds to the bottom extremity (y = 0) in the vertical direction on the display screen **11,** an ending point SV*ₑ* thereof corresponds to the top extremity (y = Y) in the vertical direction on the display screen **11;** Fig. 4E illustrates a signal when detecting the red light from the spot **20A** projected by the indicating unit **2A;** and Fig. 4F illustrates a signal when detecting the blue green light from the spot **20B** projected by the indicating unit **2B.** That is, using a time *tRᵥ* between the staring point *SVₒ* and a time point *SRᵥ* at which an electric signal due to the red light from the spot **20A** is detected, the vertical position of the light spot **20A** (*R_{y}*) on the display screen can be calculated. The vertical position *B_{y}* of the blue green light spot 20B can also be calculated, using a time *tBᵥ* that is between the time *SVₒ* and a time point *SBᵥ* at which the light signal is detected.

The two-dimensional-coordinate positional information calculated for each of the indicating units **2A** and **2B** is inputted from the image processing unit **4** into the computer **31** through the external interface **30** such as the LAN or the USB; the computer **31** controls images stored therein on the basis of the inputted positional information. Then, images that have been controlled on the basis of the positional information are displayed in real-time onto the display screen **11** of the rear projector.

According to the embodiment described above, because an imaging unit 3 takes from the back of a display screen **11** an image of light that an indicating unit **2** has projected onto the front of the display screen in order to detect the position of the indicating unit **2,** even with an obstacle placed on the display screen **11,** an apparatus can accurately detect the indicated positions on the display screen **11,** indicated by one or more indicating units **2.** In addition, because the imaging unit **3** is placed in a manner that the front faces of a camera of the imaging unit and a projector 12 are each aligned on a plane approximately parallel to the display screen **11,** the imaging unit **3** can be prevented from blocking an optical path through which the projector **12** projects images onto the display screen **11,** and the quality of the images projected onto the display screen **11** can be prevented from degrading.

Furthermore, because the imaging unit 3 is configured to take images, distinguishing the light of the predetermined wavelengths projected by the indicating units **2,** and to convert the light into electric signals corresponding to its wavelengths, the apparatus can distinguish the light projected by one or more indicating units **2** from other light and can accurately detect each position of the indicting units **2** without erroneously detecting outside light and such. In particular, because a wavelength of light to be projected by the indicating unit **2** can be selected among a plurality of wavelengths, erroneous operations that could be caused by erroneous detections of outside light are easily prevented by appropriately changing the wavelengths in use.

The wavelengths of the light to be projected by the indicating units **2** are selected from wavelengths different from line spectrums of a light source of the projector **12;** therefore, the images on the display screen **11** projected by the projector are not confused with the light on the display screen **11** projected by the one or more indicating units **2,** and the apparatus does not erroneously detect the positions of the indicating units **2.** In addition, the wavelength of the light-emitting member **21** in the indicating unit **2** may be selected among a nonvisible light band such as infrared light. In this case, the imaging unit **3** is required to distinguish the infrared light to be detected. In addition, even when the wavelength of light projected by the indicating unit **2** coincides with one of those included in outside light or images projected from the projector, provided that the intensity of the light projected by the indicating unit is set higher than those of the outside light and of the images projected from the projector, the apparatus can detect the position of the indicting unit **2,** distinguishing the light projected by the indicating unit **2** from the outside light and from the images projected by the projector.

Furthermore, the imaging unit **3** is configured so as to distinguish from each other the light with the different wavelengths that is projected by the plurality of the indicating units (the indicating units **2A** and 2B) and to convert separately the light into electric signals; therefore, even when the plurality of the indicating units (the indicating units **2A** and 2B) is used simultaneously to indicate positions on the display screen **11,** each of the indicated positions can be detected independently. According to this embodiment, the indicating unit 2 is configured such that one of the three types of light each having a different wavelength can be selected to be projected; even when three indicating units (the indicating units **2A, 2B,** and **2C)** are used simultaneously, provided that the switches **22** of the indication units are set so that the wavelengths of the light to be projected by the units are different from each other, the positions indicated by the three indicating units **2A, 2B,** and **2C** can be calculated simultaneously and independently. Furthermore, without confining to the present embodiment, if the number of wavelengths that the imaging unit **3** can distinguish is increased and the number of wavelengths of light projected from the respective indicating units **2** is increased, it is possible to increase the number of the indicating units **2** that can be simultaneously used.

In the embodiment, the positions of the indicating units **2A** and **2B** are detected as the two-dimensional coordinates on the display screen **11;** however, the positions may be detected as one-dimensional coordinates on either an x-axis or a y-axis.

In addition, in order to save electricity of the power source **25,** the indicating unit **2** may be configured to have a push switch that energizes the unit only when the display screen **11** is touched by the indicating unit **2.**

Furthermore, when an indicating unit **2** is configured to have a light source with light-condensing characteristics such as laser light so that the unit can spot-emits the light on the display screen **11** from some distance, it becomes possible to indicate a position without touching the display screen **11** with the indicating unit **2.**

## Claims

1. A position detecting apparatus, comprising:
one or more indicating units for projecting light onto the front surface of a display screen on which imaging light is projected from the back thereof by a projector;
an imaging unit placed at the back of the display screen, for picking up from the back thereof the light projected by the indicating units and for converting the light into electric signals; and
an image processing unit for analyzing the electric signals obtained from the imaging unit and for calculating a position on the display screen, of the indicating units.

2. A position detecting apparatus according to claim 1, wherein the imaging unit is placed in a manner that the front faces of the imaging unit and the projector are each aligned on a plane approximately parallel to the display screen.

3. A position detecting apparatus according to claim 1 or claim 2, wherein the imaging unit distinguishes light of predetermined wavelengths that has been projected by the one or more indicating units, and converts the light into electric signals.

4. A position detecting apparatus according to claim 1 or claim 2, wherein the imaging unit distinguishes from each other light of predetermined different wavelengths that has been projected by a plurality of the indicating units, and converts the light into electric signals.

5. A position detecting apparatus according to claim 3,
wherein the predetermined wavelengths are selected from wavelengths different from line spectrums of a light source of the projector.

6. A position detecting apparatus according to claim 4,
wherein the predetermined wavelengths are selected from wavelengths different from line spectrums of a light source of the projector.
